# EUROPEAN PATENT SPECIFICATION

(11) **EP 3 485 998 B1**
(45) Date of publication and mention of the grant of the patent: **29.01.2020**
(21) Application number: 18205792.7
(22) Date of filing: 12.11.2018
(51) Int. Cl.: B21F 15/06, B21F 27/08, F16G 11/02, H01R 11/11

(54) **SWAGING AND METHOD FOR PRODUCING A SWAGING**
VERPRESSUNG UND VERFAHREN ZUR HERSTELLUNG EINER VERPRESSUNG
SERTISSAGE ET PROCÉDÉ DE PRODUCTION D'UN SERTISSAGE

(30) Priority: 16.11.2017 EP 17202031
(43) Date of publication of application: 22.05.2019
(73) Proprietor: Gebrüder Wanner GmbH, 89073 Ulm (DE)
(72) Inventor: Raach, Peter, 72555 Metzingen (DE); Sauter, Philipp, 89160 Dornstadt (DE); Schmidt, Jürgen, 89143 Blaubeuren (DE)
(74) Representative: Graf von Stosch Patentanwaltsgesellschaft mbH

(56) References cited:
- DE-A1- 3 124 863
- DE-U1- 8 812 300
- DE-U1-202017 102 501
- GB-A- 798 499
- US-A- 2 461 030

## Description

The present invention relates to a method for producing a swaging on a rope, particularly a wire rope, and to a swaging obtained by said method as defined by the claims.

Swagings are widely used as connectors or terminations of ropes such as wire ropes and cables. In order to carry a load on a rope, it is advantageous to terminate the rope in a suitable manner, e.g. by adding an appropriate connective device to the end of the rope. Ropes terminated in such a manner are used in all fields of rope technology, such as in ropes for cableway installations, in architectural applications, for cranes, and in many further applications involving material handling in general. Minimum limiting values for parameters like the breaking load of these systems are standardized in order to warrant the safety of these systems (see, e.g., DIN EN 13411 - 8). Reliability and strength of the rope-terminal connection plays a pivotal role for complying with these standards.

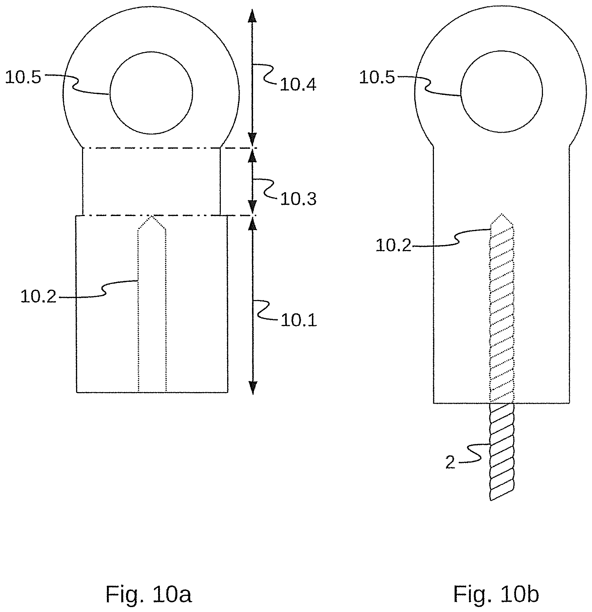

Fig. 10a shows a schematic view of an example for a swaging known in the art that is used as a rope termination. The rope termination has a compression section 10.1 with a cylindrical bore 10.2 that terminates before a connecting section 10.3 that connects the compression section 10.1 to an end section 10.4 with a through hole 10.5 that can be used to connect the compression rope termination to an anchoring device like a bolt. The rope termination is made of a moldable metal such as aluminum or steel.

Fig. 10b shows the rope termination of Fig. 10a after connecting it to a rope. In this regard, rope 2 is inserted into the bore 10.2 and pressure is applied to the circumference of the compression section 10.1 in order to deform the compression section 10.1. The compression effects a deformation of the material so that the bore 10.2 narrows and the rope 2 engages to the compression section 10.1 in a form-locking and force-locking manner. This can be seen when comparing the shape of the compression section 10.1 in Fig. 10a and 10b, i.e., before and after compression. Due to material flow during compression, compression section 10.1 of Fig. 10b is elongated and has a smaller diameter.

The swaging known in the art suffers from various disadvantages. The fitting of the rope 2 obtained by compression of the compression section 10.1 effects deformation of the swaging that results in an unpredictable change of the length of the swaging. When a rope 2 is equipped with a swaging as shown in Fig. 10a and 10b at both ends, a pre-specified length of the entire ensemble thus obtained is not ensured appropriately.

Furthermore, the fitting between the rope 2 and the compressed bore 10.2 may be insufficient and lead to drastic reduction of the breaking load of the swaging. Insufficient fitting may occur when the compression force applied to the compression section 10.1 is insufficient. Furthermore, insufficient fitting may be obtained when the rope 2 is not properly inserted in the bore 10.2 before compression. Such a failure may be difficult to detect, since the end of the bore 10.2 is positioned inside the swaging. As a consequence, the mode and stage of insertion of the rope 2 is not amendable to inspection. Furthermore, degradation of the fitting may occur over time, for example upon exposing the swaging to humidity and moisture. Humidity and moisture may enter the compressed bore 10.2 from the bottom of the swaging thereby initiating corrosion of the rope 2 fitted therein. Under such conditions, gradual slipping of the rope 2 out of the bore 10.2 may occur over time, which cannot readily be detected. Overall, the section of the rope 2 positioned inside the bore 10.2 cannot be inspected after compression.

DE 88 12 300 U1 discloses a device for fastening a rope and portion to another component. DE 31 24 863 A1 describes an end portion for a plurality of cables and a method for producing such an end portion.
Another swaging for terminating a rope is known from EP 2 068 035 B1. The swaging has a two-piece structure with a compression sleeve that is compressed onto a rope and subsequently connected to a connecting section. In its assembled state, slippage of the rope inside the compression sleeve cannot readily be detected either, since the section of the rope 2 remaining inside the bore is not amenable to inspection after compression.

Further, GB 798,499, which forms the basis for the preamble of claims 1 and 15, also describes a swaging. Here, the compression sleeve is explosively constricted by means of detonating explosive applied to the sleeve. Such a constriction may result in uneven constriction and may further impose a safety hazard on the manufacturing process. Further, this document teaches that while a hole may be drilled through a compressed portion of a cable, an excessive hole diameter needs to be avoided so as to not injure the cable beyond a compensating strength provided by the constricted sleeve.
In light of the above, it is an object of the present invention to provide a swaging that overcomes the disadvantages of known swagings described above. In particular, it is an object of the present invention to provide a swaging characterized by a high breaking load that enables improvement in the accuracy of the positioning of the swaging on the rope and allows for detection of physical damage of the swaging after fitting it on the rope.
The above object is solved by a method for producing a swaging on a rope, particularly a wire rope, according to the subject-matter of claim 1. Preferred embodiments of the invention are defined by the subject-matter of the dependent claims.
Specifically, the present invention provides a method for producing a swaging on a rope, particularly a wire rope, the method comprising the steps of:
- providing a compression sleeve with at least one rope insertion hole;
- inserting individually a rope, particularly a wire rope, in the at least one rope insertion hole;
- compressing the compression sleeve;
- post-processing the compressed compression sleeve to provide the swaging,
wherein the post-processing step comprises forming at least one hole in the compressed compression sleeve at a site where the rope was previously disposed, wherein the diameter of the at least one hole is equal to or longer than the diameter of the rope.

Preferably, the method is executing in the above-listed order. The compressing of the compression sleeve ensures structural integrity of the rope during the post-processing, in particular when forming the at least one hole through the rope.

It is one characteristic element of the present invention that the step of inserting the rope and the subsequent step of compressing the compression sleeve are performed before the swaging thus formed is post-processed by the additional step of forming a hole through the compressed compression sleeve. Preferably, the compression of the compression sleeve is performed using a pressing method, such as compressing the compression sleeve between a movable die and a fixed die. Such a compression method is ready to use and allows for well-defined compression force over the hole surface of the compression sleeve. By comparison, compression with applying a detonating explosive for explosively constricting a sleeve may provide uneven compression and less force control. Further, explosives and their use may raise inherent safety issues.

The post-processing step may also be performed simultaneously with the compression of the sleeve instead of afterwards. This may reduce cycle time, thus reducing manufacturing costs. In particular, simultaneous compression and hole forming may be enabled by using a combined punching and pressing method. In that case, one of the dies may comprise a protrusion, such as a nail-like element, to punch through both the compression sleeve and the rope while compressing the compression sleeve. Accordingly, no switching of machine for post-processing may be necessary and no additional tools may be required, while overall cycle time may be minimal. If post-processing only after the compression of the compression sleeve is finished, the hole forming may be particularly precise and overall process reliability may be increased, since the compressed compression sleeve may hold the rope in place and support it against hole forming forces.

By that inventive method, the position or site of the hole relative to the rope may be adjusted with great accuracy. Deformation of the compression sleeve during the compression step does not have an influence on the positioning of the hole in the swaging. Thus, the length of the rope connection with swagings at either end can be adjusted with unprecedented precision.

By the post-processing, a hole is formed at a site of the compressed compression sleeve where the rope is disposed. Thus, a broadly accepted prejudice in the art is overcome by the present invention. It was the long-standing basic concept that the integrity of the rope inside a swaging must not be compromised. The diameter of the hole is equal to or larger than the diameter of the rope. By providing a diameter equal or larger than the diameter of the rope, the resultant hole may allow to use the swaging for a net-like rope assembly with identical at least two ropes. This enables the use of a higher amount of identical parts. Thereby forming of the hole was known to effect severance of the rope disposed inside the swaging by the hole. E.g., the rope may be completely cut through or cut-off at the at least one hole during the post-processing step. This may allow to provide a well-defined end of the rope within the swaging. In particular, residual attachment of the rope with a nearly cut off part at the opposite end of the swaging may be avoided. Such a residual connection may otherwise weaken the swaging by residual force transfer, preventing slippage of the rope if the swaging is weakened or not successful, e.g. strong enough, that may otherwise be visibly detected. Further, a residual connection may undesirably impair the sealing effect of the hole and/ or potentially allow humidity to enter the rope. If the diameter of the hole were chosen to be smaller than that of the rope, the forming of the hole would effect penetration of the rope inside the swaging. Under such circumstances, integrity of the rope inside the swaging was widely accepted in the art to be compromised.

Preferably, the compression sleeve that is provided has a load-bearing capacity that is equal to or higher than a load-bearing capacity of the rope. In particular, the load bearing capacity of the compressed compression sleeve should be equal to or higher than a load bearing capacity of the rope. By providing such a compression sleeve, load bearing is not impaired at the site of the swaging. Further, whenever the rope is completely cut off/ through at the at least one hole during the post-processing step, the compression sleeve may transfer any force acting on the rope alone. For example, tension due to pulling of the rope may be transferred by the swaging to an attachment means, wherein overall load-bearing capacity is equal to that of the rope without the swaging.

In particular, at least along its longitudinal axis and/or along a rope insertion direction, the load-bearing capacity of the compression sleeve may be equal to or higher than the one of the rope. A load-bearing capacity may be defined as a breaking load due to longitudinal tension forces and/or tension forces acting on the swaging, the compression sleeve and/or the rope. Advantageously, the compression sleeve has the same breaking load as the rope according to a norm, such as DIN EN 13411-8. Accordingly, the compression sleeve can be designed and tested as required by DIN EN 13411-8 norm. Further, the swaging, the rope and the swaging system and a net-like rope assembly may thus fulfill the DIN requirements together as standardized.

It has surprisingly been found by the present invention that forming of the hole through the rope fitted in the swaging does, however, not lead to deterioration of the stability of the swaging on the rope, and, thus, does not reduce the breaking load of the swaging. The breaking load is now to be adjusted by varying the distance between the hole and the distal end of the compression sleeve from which the rope protrudes. The longer that distance, the longer the section of rope that is compressed inside the swaging, and the higher the breaking load of the swaging thus obtained.

The step of forming the hole such that it penetrates the rope inside the swaging involves a further unexpected advantage. When forming the hole, the rope disposed in the swaging is exposed at the inner wall area of the hole. The forming of the hole effects deformation of the material of the swaging that seals the area of exposed rope at the inner wall of the hole. For the swaging obtained after forming the hole, the rope is not exposed anymore at the inner wall of the hole but sealed off by the hole forming process. Thus, no humidity enters the bore with the rope compressed therein through the wall of the hole. Furthermore, slippage of the rope inside the swaging becomes visible as an indent at the inner wall of the hole in the area where the rope is disposed. As a result, reliable and swift inspection of the quality of the swaging any time after the manufacturing of the swaging is enabled.

Furthermore, the overall length of the swaging can be significantly reduced. The connecting section between the section in which the rope is fitted and a functional section of the swaging comprising the hole is eliminated when applying the method according to the present invention.

Altogether, the method of producing a swaging according to the present invention provides a swaging of reduced length, high reliability and high tensile strength that allows configuration and provision of terminated ropes with enhanced length accuracy. It also allows for simple identification of the physical characteristics or any physical damage of the swaging itself.

The rope used in the method of producing a swaging according to the present invention is preferably a wire rope. However, the type of rope that can be used according to this invention is not limited to wire ropes. Generally, any rope made of metal, including steel ropes, stainless steel ropes, copper ropes, aluminum ropes, ropes of other metals or ropes made of a combination of metals may be used. Ropes made of textile fibres, high-strength fibres, monofilaments or combinations thereof, including atlas ropes, aramid ropes, dyneema ropes are also suitable for being processed by the inventive method. Furthermore, the invention is also applicable to ropes comprising a combination of the above materials, such as steel ropes with a dyneema core.

The compression sleeve used by the method of producing a swaging according to the present invention is preferably manufactured of a moldable, non-brittle material that may be deformed under compression. Metal compression sleeves are particularly preferred. Appropriate metals to be used for the compression sleeve include aluminum, (stainless) steel and copper, but are not limited thereto.

The step of compressing the compression sleeve may be performed based on various alternative processes. Commonly used compression processes may include pressing between dies of a press, rolling, hammering and drawing. The compression sleeve may be heated before and/or during compression. Such an approach is particularly advantageous, if a compression sleeve with a larger diameter is to be used, since heating of the compression sleeve enhances the deformability of the compression sleeve.

The step of forming the hole may be performed e.g. by drilling through the compressed compression sleeve. Alternatively, the hole may be formed by lasing, milling, waterjet cutting, plasma cutting or any other method that is suitable for processing the material employed for the rope and the compression joint.

The at least one hole may be formed as a hole with a round cross section. Such a form of the at least one hole may allow easy insertion of further ropes, for example for providing a net-like rope assembly. The at least one hole may accordingly be essentially cylindrical. The at least one hole may also be formed as a hole with a non-circular cross section. Such a cross section, for example a polygonal cross section such as a square cross section, may provide means for transmitting rotational forces through the hole onto the swaging. This may allow, for example, to prevent unwanted rotation of an attachment means.

The step of introducing a hole into the compressed compression sleeve may include forming a through hole that penetrates the compression sleeve completely as preferred embodiment, as well as introducing a blind hole or a cavity into the compression sleeve. In any case, the hole is formed such that it is located at a site where the rope is disposed such that the integrity of the rope is compromised by the hole forming step.

The preferably final post-processing step according to claim 1 may include further processing of the compressed compression sleeve. Particularly, refinement of the surfaces of the compressed compression sleeve may be encompassed by the post-processing step. It is further preferred that the post-processing step comprises (shape or surface) processing of the compressed compression sleeve that alters the shape of the compressed compression sleeve, such as milling of portions of the compressed compression sleeve to provide a swaging of desired shape and dimensions, depending on the envisaged application of the swaging obtainable by the claimed method.

The diameter of the rope insertion hole advantageously corresponds to the diameter of the rope. Thereby, deformation of the compression sleeve required for fitting the compression sleeve onto the rope is reduced. Thus, manufacturing of the swaging is simplified. In general, the shape and size of the rope's insertion hole is not particularly limited. It is, however, preferable to adapt the cross-sectional shape and size of the rope's insertion hole to the cross-sectional shape of the rope on which the swaging is to be formed. Preferably, the hole is of cylindrical shape, while an angular shape is conceivable as well.

By a preferred embodiment, the compression sleeve has essentially cylindrical shape, and the rope insertion hole lies on the cylinder axis. By such a design, a uniform fitting of the sleeve on the rope is achieved when compression forces acting radially inwards and towards the cylinder axis are applied to the sleeve, e.g. by inserting it in suitably shaped dies of a press. However, the shape of the compression sleeve is not limited to a cylindrical shape, nor is the position of the rope insertion hole limited to the axis of the cylinder. Depending on the individual field of use, other shapes than a cylindrical shape may be advantageous, as well as placing the rope's insertion hole at a site being off-axis.

By a preferred embodiment, the rope insertion hole is formed as a through hole penetrating the compression sleeve. The step of inserting the rope into the rope insertion hole is performed such that the rope protrudes beyond both termini of the rope insertion hole. Thereby, insufficient insertion of the rope into the rope insertion hole before compression is virtually impossible. Sufficient insertion of the rope is ascertained by ensuring that the rope is inserted such that it protrudes beyond both ends of the rope insertion hole. Such an approach improves reliability of the swaging.

In a further preferred embodiment, the compression sleeve comprises a plurality of rope insertion holes and a plurality of ropes is inserted into respective rope insertion holes before compressing the compression sleeve. By such a swaging, load suspended on one rope is shared by a plurality of ropes by the swaging.

It is further preferred that the hole to be formed by the post-processing step is a through hole, preferably of cylindrical shape. This allows the hole to be used as suspension means for the rope, by inserting a bolt or the like in the hole.

It is further preferred that the hole to be formed by the post-processing step is essentially perpendicular to the plane of the rope in the compression sleeve. The swaging thus provides a hingeable support for the terminal section of a rope provided with the compression sleeve. If a hingeable support on a tilted axis were required, the hole could also be formed non-perpendicularly to the plane of the rope in the compression sleeve.

In an alternative preferred embodiment, the hole is configured as a blind hole or as a cavity. A blind hole may be useful to stabilize the orientation of the swaging by engagement with a correspondingly shaped protrusion of another component. The swaging is thereby supported on the surface from which the rope protrudes. If the hole is configured as a cavity, further functional modifications of the swaging become possible. In this context, a cavity is to be understood as a hole with a cross-sectional shape that is not defined by a closed outline on the surface of the swaging.

By a further preferred embodiment, the post-processing step comprises a surface processing step on the compression sleeve, particularly a flattening sub-step, thereby flattening at least one surface of the compression sleeve. Such an approach allows for a further refinement of the function of the swaging.

A further aspect of the present invention relates to a swaging obtainable by the above-described method as defined by claim 15. The swaging comprises at least one rope, particularly a wire rope, and a compression sleeve having at least one rope insertion hole with the at least one rope inserted in the one or more insertion hole(s), the compression sleeve being compressed onto the at least one rope and at least one hole that is formed in the compressed compression sleeve and the rope, wherein the diameter of the at least one hole is equal to or larger than the diameter of the rope. The compression sleeve being compressed may result in compressed engagement with the inserted rope, particularly preventing axial movement of the at least one rope in the compression sleeve and allowing force to be transmitted from the rope to the compression sleeve and vice-versa.

Preferably, the at least one hole is formed essentially simultaneously in the compression sleeve and the at least one rope after the at least one rope has been inserted in the one or more insertion hole(s). Such a swaging may have a rope with a well-defined length and end. That the at least hole is formed after insertion of the rope in both the sleeve may possibly be detected in the swaging at the connection point between the compression sleeve, the rope and the at least one hole.

The at least one hole may be formed after the compression sleeve has been compressed onto the at least one rope. Such a swaging may be especially cost-effective to manufacture. Alternatively, the at least one hole may be formed simultaneously with the compression sleeve being compressed onto the at least one rope. Again, the difference may possibly be seen in the swaging at the connection point between the compression sleeve, the rope and the at least one hole.

The rope of the swaging may be completely cut off or cut through at the at least one hole.

Advantageously, a wall thickness of the compression sleeve at the rope insertion hole and/or at the at least one hole may be at least 40% of a diameter of the rope, more preferably at least 50%, further preferably at least 100% and even further preferably at least 200%. However, the wall thickness may depend on the structure and material of the rope and the material of the compression sleeve. The before-mentioned values may preferably suit for embodiments, which exhibit similar or identical materials for the rope and the compression sleeve, for example the compression sleeve composed of steel and the rope being a steel wire cable. If the strength of the material of the compression sleeve is significantly higher than the rope, wall thickness requirements as stated above may be reduced by the factor of their relative strengths. For example, a material combination that may allow thinner wall thickness of the compression sleeve would be a stainless-steel compression sleeve and a copper or significantly lower grade steel rope. The wall thickness and/or the insertion hole diameter may correspond to the compression sleeve in the compressed or uncompressed state. If more than one rope is inserted in the sleeve, the wall thickness may correspond to the combined diameter of the more than one inserted ropes. Such a thickness of the compression sleeve may provide sufficient structural integrity to allow to cut off/ or through the rope(s) at the at least one hole while still providing a swaging that may bear the same loads as the rope(s). The thickness may be measured as the distance between the inner wall surface at the at least one hole or the insertion hole and an outer side of the compression sleeve, in particular in a direction perpendicular to a longitudinal direction of the compression sleeve and/or an insertion direction of the rope(s). If more than rope insertion holes are provided in the compression sleeve, thickness may alternatively be defined as the distance between a central longitudinal axis of the compression sleeve and its outer surface, in particular measured in the direction as explained above, while subtracting any diameter or width of the rope insertion hole in between the central longitudinal axis and the outer surface in the same direction.

A further aspect of the present invention relates to a method for connecting two or more intersecting ropes. The method comprises
- providing at least one swaging on a (compressed first) rope by a method of the invention; and
- individually inserting at least one second rope, particularly a wire rope, into the at least one hole of the at least one swaging to form one or more intersecting connection(s) of the at least one (compressed first) rope and the at least one second rope.

Optionally, the above steps may be repeated for generating intersecting connections for one or more additional (first) rope(s).

The swaging produced by the first step of the method for connecting at least two intersecting ropes is carried out according to the method for producing a swaging on a rope described above and claimed by claim 1. The method for connecting at least two intersecting ropes allows to establish an intersecting connection for at least two ropes. Thereby, the second rope effectively penetrates the (compressed first) rope(s) on which the swaging(s) is/are manufactured. The hole into which the second rope is inserted is arranged such that it intersects the rope on which the swaging is manufactured. Advantageously, no frictional wear between the intersecting ropes occurs, thus improving durability of the rope connection.

The second rope may be movably arranged along its longitudinal axis in the at least one hole. Such a connection may be more versatile to use.

The diameter of the through hole of the swaging(s) essentially corresponds to or is chosen to be larger than the diameter of the second rope. Thereby, a clamping effect of the swaging on the second rope is achieved such that the second rope cannot slip or move within the hole of the swaging(s). Such an embodiment improves the mechanical stability of the intersecting rope connection.

According to a further preferred embodiment, the method for connecting at least two intersecting ropes may further comprise a step of compressing the swaging after the second rope has been inserted into the hole of one or more swaging(s). Thereby, the second rope may be immobilized inside the swaging(s) of the first rope(s) such that the mechanical stability of the connection is further improved. More than one second rope may be foreseen, such that each second rope is individually guided through the swagings positioned in series at whatever distance from each other on at least one first rope. Also the second rope(s) may comprise one or more swaging(s), in particular swagings as obtainable by a method of the present invention.

The above connecting method may also be used to connect a plurality of second ropes to one or more (compressed first) rope(s). Thereby, a plurality of swagings is e.g. produced on at least one first rope and a plurality of second ropes is inserted into some or all of the respective holes of the swagings of the at least one compressed first rope. The method described above allows to establish a net-like rope structure by arranging multiple first and/or second ropes with the help of a plurality of swagings manufactured on one or more first ropes in an equidistant or non-equidistant series. For such a net-like rope structure, also the second rope(s) may comprise one or more of the swagings according to the present invention. As a result, the swagings on the ropes and the holes therein are aligned such that second ropes may be inserted through respectively aligned holes. Such an assembly allows the formation of a rope net without frictional forces on intersecting ropes.

The object of the invention is further solved by a swaging as described above or a net-like assembly comprising at least two ropes and at least two swagings as described above. Such a net-like assembly is typically obtainable by a method for connecting two intersecting ropes as described herein.

The present invention further relates to the use of a swaging as described above to connect two intersecting ropes according to the method described above.

The above and further features and advantages of the invention will become more readily apparent from the following detailed description of preferred embodiments of the invention with reference to the accompanying drawings, with reference signs designating corresponding features, and in which:
- Fig. 1a: is a schematic perspective view of a compression sleeve used in a method according to the present invention;
- Fig. 1b: is a view of the compression sleeve of Fig. 1a with an inserted rope;
- Fig. 1c: is a view of the compression sleeve in Fig. 1b after compression;
- Fig. 1d: is a view of a swaging according to the present invention that is provided by a step of post-processing the compressed compression sleeve shown in Fig. 1b;
- Fig. 1e: is a sectional view of the compression sleeve in Fig. 1b;
- Fig. 1f: is a sectional view of the compression sleeve of Fig. 1c;
- Fig. 1g: is a sectional view of the swaging of Fig. 1d;
- Fig. 2a: is a schematic perspective view of a further compression sleeve used by a method according to the present invention comprising a rope insertion hole that is formed as a through hole;
- Fig. 2b: is a view of the compression sleeve of Fig. 2a with an inserted rope;
- Fig. 2c: is a view of the compression sleeve of Fig. 2b after compression;
- Fig. 2d: is a view of a further swaging according to the present invention that is provided by a step of post-processing the compressed compression sleeve shown in Fig. 2b;
- Fig. 2e: is a sectional view of the compression sleeve of Fig. 2b;
- Fig. 2f: is a sectional view of the compression sleeve of Fig. 2c;
- Fig. 2g: is a sectional view of the swaging of Fig. 2d;
- Fig. 3a: is a schematic perspective view of yet another compression sleeve used in a method according to the present invention comprising a plurality of rope insertion holes with inserted ropes;
- Fig. 3b: is a view of the compression sleeve in Fig. 3a after compression;
- Fig. 3c: is a view of a further swaging according to the present invention that is provided by a step of post-processing the compressed compression sleeve shown in Fig. 3b;
- Fig. 3d: is a sectional view of the compression sleeve of Fig. 3a;
- Fig. 3e: is a sectional view of the compression sleeve of Fig. 3b;
- Fig. 3f: is a sectional view of the swaging of Fig. 3c;
- Fig. 4a: is a schematic perspective view of a functional swaging according to the present invention;
- Fig. 4b: is a schematic perspective view of a malfunctioning swaging;
- Fig. 5a: is a sectional view of another swaging according to the present invention in which the hole is configured as a cavity;
- Fig. 5b: is a sectional view of another swaging according to the present invention in which the hole is configured as a cavity with an angled or tilted principal axis relative to the rope;
- Fig. 5c: is a sectional view of another swaging according to the present invention in which the rope is arranged off-axis within the swaging;
- Fig. 6: is a perspective view of a swaging according to an embodiment of the present invention with flattened surfaces of the compression sleeve on two opposite sides;
- Fig. 7a: is a perspective view of a swaging according to another embodiment of the present invention;
- Fig. 7b: is a view of the swaging of Fig. 7a when used to form an arrangement for two intersecting ropes with the second rope guided through the hole of the swaging compressed on the first rope;
- Fig. 7c: is a schematic view of a net-like arrangement of ropes using swagings as the one shown in Fig. 7b to connect first ropes aligned in parallel with swagings compressed thereon and second ropes guided through the holes of the swagings also aligned in parallel thereby establishing intersecting ropes;
- Fig. 7d: is a schematic view of an alternative net-like arrangement of ropes using swagings as the one shown in Fig. 7b to connect the intersecting ropes, wherein one of the second ropes encompasses a swaging such that the first rope is guided through the hole of a swaging on the second rope;
- Fig. 8a: is a schematic perspective view of a swaging according to an embodiment of the present invention with a conical shape;
- Fig. 8b: is a schematic perspective view of a swaging according to an embodiment of the present invention with a convex shape;
- Fig. 9: is a schematic illustration of an experimental setup used for determining the breaking load of a swaging;
- Fig. 10a: is a schematic view of a rope termination known from the prior art;
- Fig. 10b: is a schematic view of the rope termination in Fig. 10a with inserted rope after compression.
- Fig. 11: illustrates in a sectional view force lines in a swaging according to the invention.

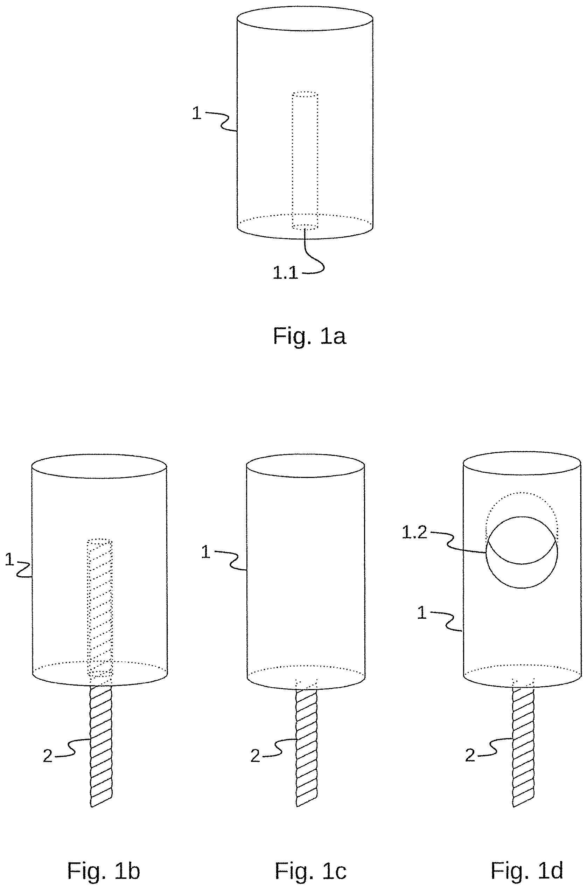

Fig. 1a is a schematic perspective view of a compression sleeve 1 used in a method according to the present invention. Compression sleeve 1 has a cylindrical shape with a rope insertion hole 1.1 that is manufactured as a non-through hole (blind hole) and extends from the sleeve's bottom along the cylinder axis of the compression sleeve 1 to the upper part of the sleeve without extending through the entire body of the sleeve. The rope insertion hole 1.1 is cylindrical and has a diameter that is slightly larger than that of rope 2 on which a swaging is to be formed.

Fig. 1b is a perspective view of the compression sleeve of Fig. 1a with inserted rope 2. After insertion of rope 2 in the rope insertion hole 1.1, compression sleeve 1 is subjected to compression forces that act essentially in a radially inward direction of cylindrical compression sleeve 1 (e.g. perpendicular to the direction of rope 2), thus forcing the compression sleeve 1 onto rope 2. The compression can be applied e.g. by any of the compression methods disclosed above.

Compression forces induce deformation of compression sleeve 1. As a result, the rope insertion hole 1.1 is narrowed and compacted. Compression sleeve 1 thereby enters a force- and form-fit connection with inserted and encased or engrafted rope 2. The result is presented by Fig. 1c. The remaining void volume after insertion of rope 2 in insertion hole 1.1 (see Fig. 1b) disappears due to the application of forces resulting in compacting compression sleeve 1.

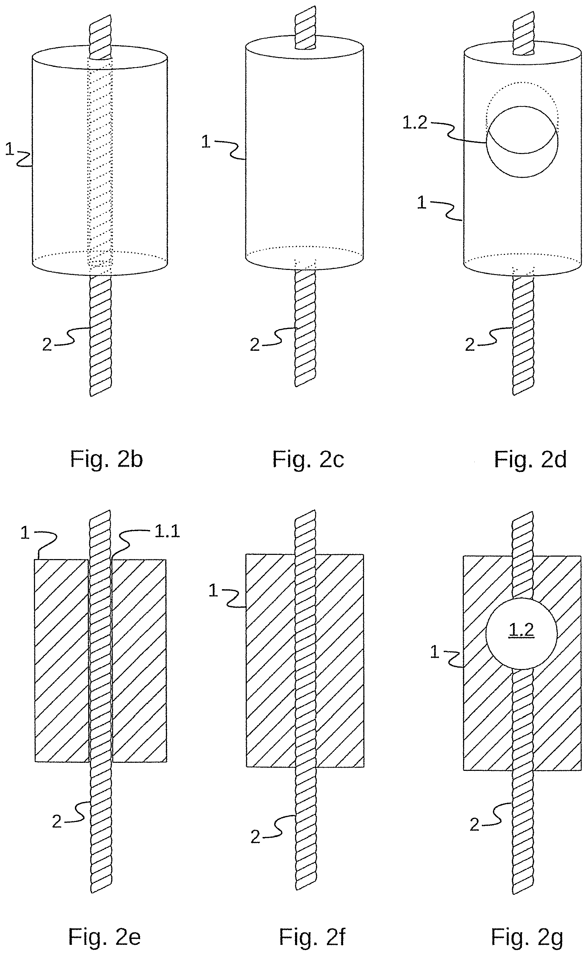

Subsequently, compressed compression sleeve 1 is subjected to post-processing. The post-processing step comprises forming or introducing hole 1.2 into the compressed compression sleeve 1. As shown in Fig. 1d, hole 1.2 is a through-hole that extends in a direction essentially perpendicular to the cylinder axis of the compression sleeve 1 along which rope 2 is disposed. Hole 1.2 is located at a site where the rope 2 is disposed in Fig. 2c, i.e., hole 1.2 is formed such that it penetrates or eliminates rope 2 previously disposed in the compression sleeve 1 at that particular site of the hole. Elimination of the rope 2 corresponds to a case where the diameter of the at least one hole (1.2) is equal to or larger than the diameter of the rope (2) and the rope (2) is completely cut off or cut through at the at least one hole (1.2) during the post-processing step.

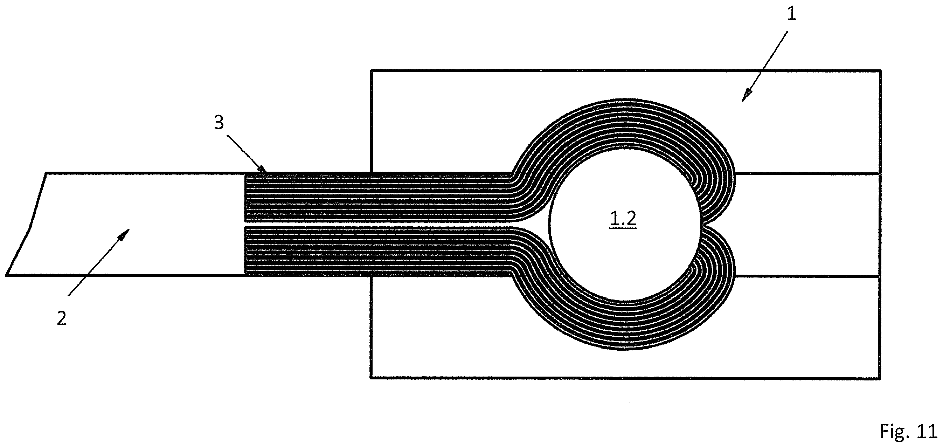

Fig. 11 illustrates in a sectional view how the compression sleeve 1 bears tension loads acting on the rope 2 at the location of the at least one hole 1.2. As illustrated by the force lines 3, tension in the rope 2 is transmitted through the pressure fitting between the compression sleeve 1 and the rope 2 onto the rope. In the longitudinal area of the hole 1.2, only the compression sleeve 1 is load bearing while the rope 2 does not contribute any more due to its elimination. At least in the area of the hole 1.2, the compression sleeve is therefore designed with the same or higher load bearing capacity as/ than the rope 2 according to the norm DIN EN 13411-8. As can also be seen in Fig. 11, the force lines terminate at the at least one hole 1.2 at the side opposite of the origin of forces lines. Accordingly, Fig. 11 illustrates an embodiment with attachment means, such as an anchoring, holding the rope 2 with the swaging in place. Again, the compression sleeve 1 is designed to bear these loads at this side and transmit them to the anchor.

The load may be transferred from the rope 2 (shown on the left-hand side of Fig. 11) through the compression sleeve 1 to the rope (shown on the right-hand side of Fig. 11). Under such circumstances, the force lines 3 may be symmetrical with respect to the at least one hole 1.2. E.g., the force lines on the right side of the at least one hole 1.2 may be essentially identical to the force lines 3 illustrated on the left side of the at least one hole 1.2 in Fig. 11.

The present inventors found that, contrary to common conception in the art, disruption of the integrity of the rope 2 inside compression sleeve 1 does not negatively affect the breaking load of the swaging, provided that the remaining section or length of rope 2 in compression sleeve 1 (from the compression sleeve's entry site of rope 2 to hole 1.2) in insertion hole 1.1 is sufficient and/or the fitting of compression sleeve 1 on rope 2 following compression of compression sleeve 1 is sufficiently tight. Reduction of the length of the swaging as compared to prior art swagings is thereby achieved. A connection section is not needed anymore between the compression section in which the rope 2 is held and the end section in which a hole for suspending the swaging is disposed. Simultaneously, standardized requirements for breaking load of the swaging (like DIN EN 13411-8) are still met. The production of a swaging according to the method of the present invention, in particular the forming of a hole such that it penetrates or eliminates rope 2 disposed in the swaging at a given site implies additional advantages as presented in the following.

The step of forming hole 1.2 may involve cold-forming and/or warm-forming of the hole's surface material of compression sleeve 1 at the walls of hole 1.2. Thereby, the rope's and the compression sleeve's material are compounded such that the inner wall of the hole 2 represents a sealed surface. By that sealing of the adjacent section of rope 2 at the inner wall of the hole 1.2, it is ensured that fluid or humidity does not enter at the hole's inner wall into the swaging or insertion hole 1.1. Physical damage to the swaging through corrosion in its interior is thus largely inhibited.

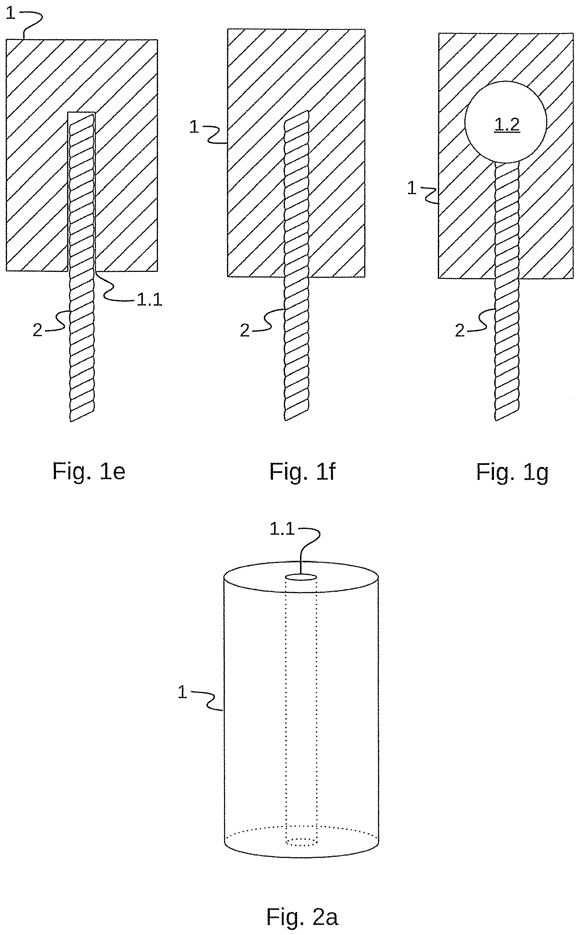

Fig. 1e to 1g are sectional views of the arrangements shown in Fig. 1b to 1d, respectively. In Fig. 1e, the void volume in the area surrounding rope 2 and within rope insertion hole 1.1 is shown. Fig. 1f shows compression sleeve 1 with inserted rope 2 after exerting forces for compression. As a result, the void space disappears by compacting compression sleeve 1. Fig. 1g represents the manufactured swaging after the post-processing step including hole 1.2 that penetrates or eliminates a portion of rope 2 inside the swaging.

Fig. 2a is a schematic perspective view of another compression sleeve 1 used in a method according to the present invention. The compression sleeve 1 of Fig. 2a exhibits rope insertion hole 1.1 that is configured as a through hole and extends along the entire cylinder axis of compression sleeve 1, thereby extending beyond the body of the sleeve such that rope 2 exits at the bottom and top surface of compression sleeve 1. Again, rope insertion hole 1.1 has a diameter that is slightly larger than that of rope 2, which carries the swaging.

Fig. 2b is a perspective view of compression sleeve 1 of Fig. 2a with inserted rope 2. Rope 2 is inserted in through-hole insertion hole 1.1., such that rope 2 protrudes beyond the upper and lower exit openings of rope insertion hole 1.1. After insertion of the rope 2 in rope insertion hole 1.1, compression sleeve 1 is compressed to yield the compressed compression sleeve 1 shown in Fig. 2c. Subsequently, compressed compression sleeve 1 is subjected to a step of post-processing, by introducing hole 1.2 into the compressed compression sleeve 1, as shown in Fig. 2d.

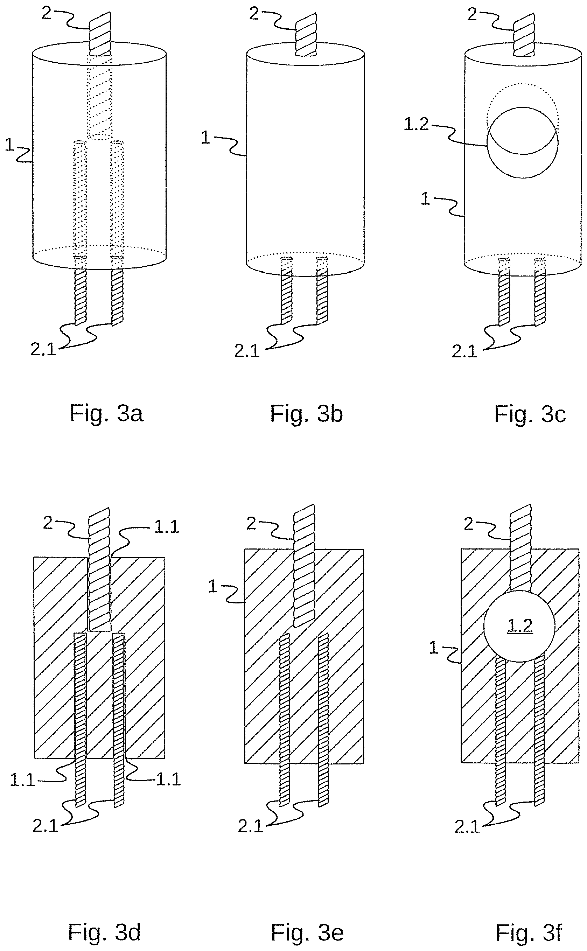

Fig. 2e to 2g are sectional views of the arrangements shown in Fig. 2b to 2d. Again, the void space surrounding rope 2 within rope insertion hole 1.1 left after insertion of rope 2 and before compression is shown by Fig. 2d. Fig. 2e represents compression sleeve 1 after its compression with inserted rope 2 now being engaged in a force- and form-fit arrangement with compressed compression sleeve 1. Fig. 2g exhibits the inventive swaging after its post-processing with its hole 1.2 that interrupts rope 2 inside the swaging. The portion of rope 2 extending beyond the upper surface of the swaging in Fig. 3c may be cut-off after the compression step, if required. Thereby, the upper surface of the swaging is flush with the distal end of rope 2.

Fig. 3a is a schematic view of another compression sleeve 1 used according to a method of the present invention. Compression sleeve 1 of this embodiment exhibits three rope insertion holes 1.1, as shown by Fig. 3d. Rope 2 is inserted into the rope insertion hole 1.1 from the top of compression sleeve 1. Ropes 2.1 are inserted in the rope insertion holes 1.1 from the bottom of compression sleeve 1. Fig. 3b and 3e depict compression sleeve 1 with inserted ropes 2, and 2.1, respectively, after compression. The forming of the hole 1.2 by the post-processing step is performed such that all ropes 2, 2.1 are penetrated by the hole. The rope's portion at the site of the hole is eliminated as shown by Fig. 3c and 3f representing the swaging after the post-processing step.

The swaging shown in Fig. 3c and 3f may be employed with the object to better distribute a force acting on rope 2 by ropes 2.1. The embodiment shown by Fig. 3a to 3f comprises three rope insertion holes 1.1. However, any number of rope insertion holes 1.1 may be used depending on the physical or mechanical requirements to be considered for the swaging's application.

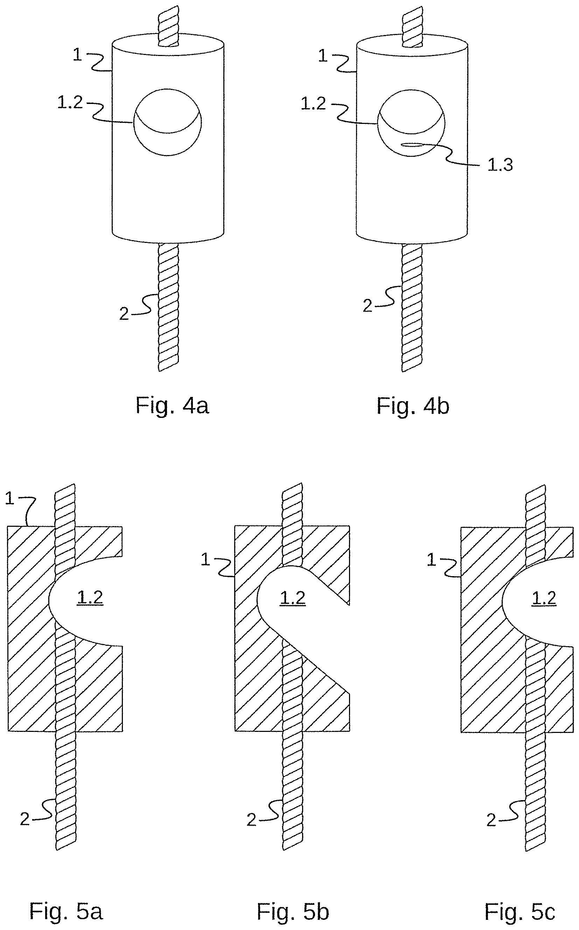

Fig. 4a and Fig. 4b illustrate a further advantageous feature of the swaging according to the present invention. Hole 1.2 is formed at a site where rope 2 was previously disposed. As disclosed above, compounding of the material of the compression sleeve 1 and the rope that occurs by forming hole 1.2 provides a sealing effect on the inner walls of hole 1.2. The sealed inner wall area is flush with the wall of the hole 1.2. If rope 2 inside the compressed compression sleeve 1 should lose its anchorage in the compression sleeve and start slipping (e.g. due to insufficient compression of the compression sleeve 1 or due to corrosion of rope 2 inside the swaging), an indent area 1.3 forms at the inner wall of hole 1.2 above the insertion hole 1.2. of rope 2.

Such an indent area is illustrated by Fig. 4b which shows a perspective view of a swaging in which slipping of rope 2 in the lower section of the swaging occurred. An indent area 1.3 results from slipping or tearing off of rope 2 from its anchorage inside the swaging. Such an indent becomes visible upon inspection of the inner wall of hole 1.2. Hereby, a straight-forward and reliable fault or failure detection of the swaging is enabled that is not achieved by previously known swagings. Prior art swagings are exemplified by Fig. 10a and 10b. Due to the distance (of the hole from the tip of insertion hole 10.2) resulting from region 10.3, any anchorage issues for rope 2 inside compression section 10.1 do not affect the integrity of the inner wall of the hole (10.5) and are thus not visible by outside inspection.
The principle of detecting indent 1.3 following undesired slipping or tearing off of rope 2 as shown by Fig. 4b is applicable to swagings shown by Fig. 1d/1g and Fig. 3d/3g analogously. In each case, hole 1.2 is formed such that the ropes in the swaging terminate at or very close to the inner wall of hole 1.2, such that slipping of the ropes is similarly detectable as an indent 1.3 at the inner wall of hole 1.2

For the embodiments described above, hole 1.2 is formed as a through hole that completely penetrates the swaging obtainable from the claimed method. Hole 1.2 of the swagings shown by Fig. 1 to 4 may be used to suspend rope 2, which is terminated by the swaging, by inserting a bolt or the like in hole 1.2. For this reason, hole 1.2 is formed as a through hole that completely penetrates the swaging in a direction essentially perpendicular to its cylinder axis. The invention, however, goes beyond such a configuration. The direction of hole 1.2 may e.g. form a skewed angle with the cylinder axis. Furthermore, hole 1.2 is not limited to a through hole, but may also be configured as a blind hole or a cavity.

Fig. 5a shows a sectional view of a swaging according to the present invention in which hole 1.2 is configured as a cavity, still interrupting rope 2. In contrast to a through hole, the cavity is not confined by walls surrounding the hole of the swaging walls. Rather, "hole 1.2" is defined such that the swaging comprises a concave indentation. Such an embodiment allows engagement of hole 1.2 of the swaging with a correspondingly shaped element.
Fig. 5b is a sectional view of another swaging according to the present invention. Here, hole 1.2 is configured as a concave cavity that extends along a sectional plane in the swaging that is angled with respect to the axis of the swaging. Hereby, the swaging is configured as a hook-like structure such that rope 2 terminated with the swaging can be adhered to a rod-like structure.

For all embodiments of the swaging described above, rope 2 is disposed on the axis of the swaging. It is, however, also possible to arrange the rope 2 off-axis by foreseeing a rope insertion hole 1.2 in the compression sleeve 1 being off-axis. Fig. 5c shows an embodiment of a swaging according to the present invention with an off-axis arrangement of rope 2.

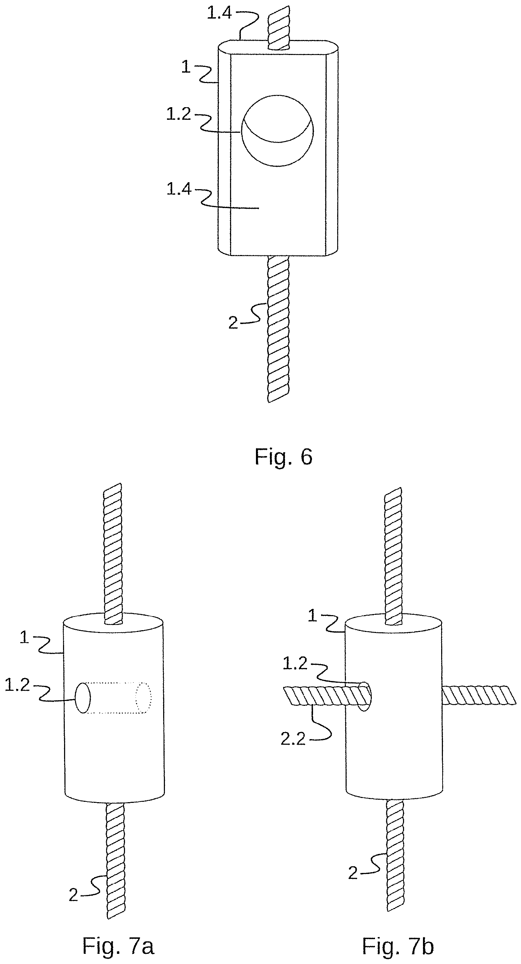

Fig. 6 is a perspective view of a swaging according to the present invention which is provided by a production method with the post-processing step comprising a sleeve surface processing step. The surface processing step particularly includes modifying the outer shape of the sleeve such that e.g. a non-cylindrical shape is defined. Thereby, at least one surface of the compressed compression sleeve 1 may e.g. be flattened. This is shown in Fig. 6, wherein the foreground and background exhibit flat or flattened surfaces 1.4corresponding to the surfaces representing the openings of hole 1.2.

By flat surfaces 1.4, the inventive swaging may be inserted into a slit with a width that corresponds to the distance between flat surfaces 1.4, in order to hinder rotation of the swaging around its cylindrical axis. This embodiment may increase stability of a support of the swaging.

According to the present invention, the step of surface flattening may also be performed before forming the hole 1.2 (but after compression of compression sleeve 1). If a step of surface flattening is performed before forming hole 1.2, forming of hole 1.2 is facilitated. That holds even more so, whenever hole 1.2 is formed by a drilling step. Thereby, the risk of drill slipping on the curved surface of the compressed compression sleeve 1 is essentially avoided.

Hole 1.2 of the swaging may also be configured as a blind hole that penetrates or eliminates rope 2 at the site of the blind hole, but does not cross the entire width of the swaging. Such an embodiment is e.g. represented by Fig. 6. The swaging displays two flat surfaces 1.4 which may be held or fixed by a slit of appropriate size. For suspension of rope 2, the swaging may be supported on the lower surface of the swaging from which rope 2 protrudes. Hole 1.2 may be formed as a blind hole which engages with a correspondingly shaped protruding element in order to stabilize or immobilize the swaging relative to its support, in particular avoiding rotation around its axis.

The above embodiment apply the swaging as a terminating component of rope 2. In addition, the swaging according to the present invention may be employed or positioned at whatever non-terminal position of rope 2. Hereby, the swaging is preferably characterized by a rope insertion hole 1.1 configured as a through hole, as illustrated in Fig. 2d and 2g, such that rope 2 extends beyond the bottom and the top portion of the swaging. Hole 1.2 is disposed in a central area of the compression sleeve 1 with respect to its cylindrical axis.

As a result, the swaging according to the present invention may be used to arrange rope 2 along its axis defined by insertion hole 1.1 and at least one additional rope 2.2, typically guided through-hole 1.2 being positioned e.g. perpendicularly relative to the swaging's axis in an intersecting manner, as shown by Fig. 7a and 7b. For such an application, the diameter of the hole 1.2 is chosen such that it is slightly larger than or essentially corresponds to the diameter of rope 2.2. Fig. 7b shows a swaging provided on rope 2 guided through insertion hole 1.1 along the swaging's axis (vertical). A second, horizontally arranged rope 2.2 is inserted in through hole 1.2. Since hole 1.2 is formed at a site of compressed compression sleeve 1, where rope 2 was previously disposed, rope 2.2 effectively penetrates or eliminates rope 2 at the site of the hole. Thereby, wear-off at the intersection of (first) rope 2 and (second) rope 2.2 - caused by friction of adjacent and perpendicularly arranged ropes or of the second rope 2.2 with the inner wall or the edges of hole 1.2 - is essentially avoided. If the diameter of hole 1.2 is chosen to be substantially larger than that of the second rope 2.2, contact of the swaging and the second rope 2.2 is essentially avoided. If mechanical stability of the connection is to be enhanced, it is also possible to chose the diameter of hole 1.2 to be substantially identical to the diameter of the second rope 2.2, such that the second rope 2.2 is wedged in hole 1.2.

If mechanical stability of the connection is to be further increased, a second compression step on the swaging after inserting the second rope 2.2 in hole 2.1 may be carried out, such that the swaging is deformed and compacted to engage in a form- and force-fit connection with second rope 2.2.

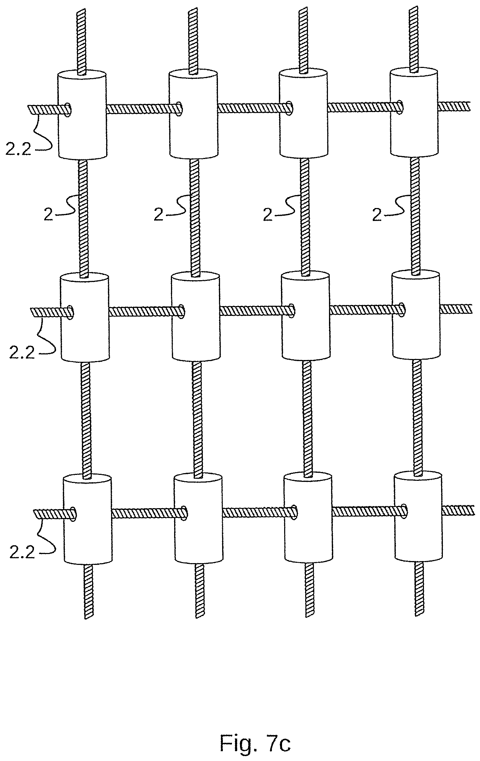

Multiple swagings according to the embodiment shown in Fig. 7a and 7b may be used to provide a grid of ropes in a net-like manner. Intersecting ropes effectively penetrate each other preferably without giving rise to wear-off caused by friction of intersecting ropes. Fig. 7c schematically depicts such a net-like arrangement of a plurality of ropes. A plurality of swagings is produced on each single of a plurality of ropes 2 (four vertically aligned first ropes 2 according to Fig. 7c). Ropes 2 are arranged in parallel such that the three (or more) swagings formed in series thereon are aligned. A plurality (three or more) of second ropes 2.2 (three horizontally arranged second ropes 2.2 in Fig. 7c) may be guided through holes 1.2 of the aligned swagings positioned on the ropes 2 to form a network of first ropes 2 and second ropes 2.2. No frictional wear-off between intersecting ropes occurs by the assembly according to Fig. 7c. Any suitable number of ropes and swagings may be combined to provide an assembly of the desired structural character and/or of the desired physical strength.

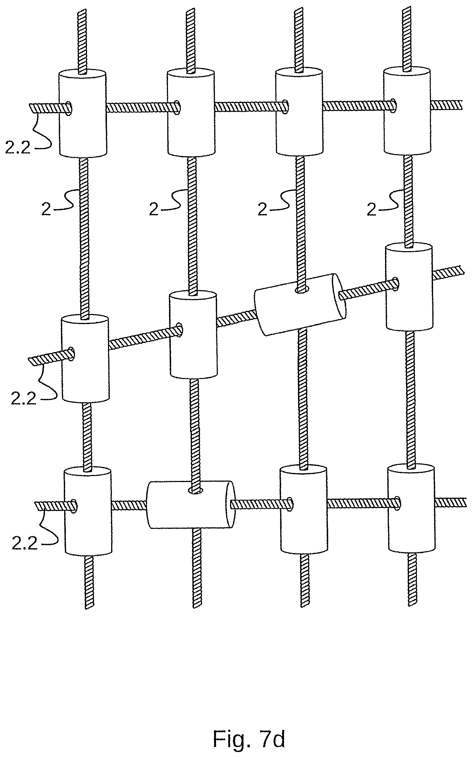

Fig. 7d shows an alternative net-like arrangement. Swagings are positioned on essentially horizontally arranged second ropes 2.2 (two swagings) and on vertical first ropes 2 (ten swagings). Such an embodiment enables a cross-linking effect of the distinct strands of the net-like arrangement. Thereby, relative stability of the net may be further enhanced. Additionally, the middle horizontal rope is not arranged perpendicular to the vertically arranged first ropes 2, but such that the intersections between this rope and the vertically arranged first ropes 2 occur at an angle unequal to 90°. For this, the swagings that provide the connection between the middle horizontal rope and the vertically arranged first ropes 2 are manufactured such that the angle between the rope insertion hole 1.1 and the hole 1.2 is not 90° but corresponds to the angle of intersection between the middle horizontal rope and the vertically aligned first ropes 2. Such an oblique arrangement of one or more ropes in the net-like structure may aid in further improving the mechanical stability of the net.

While the embodiments described above use a cylindrical compression sleeve 1, the present invention is not limited to cylindrically shaped compression sleeves 1. Any shape may be used for compression sleeve 1, provided that the fitting on rope 2 resulting from the step of compressing the sleeve is sufficiently tight and encompasses a sufficient length of rope 2 to ensure the required breaking load of the swaging. Compression sleeves 1 with e.g. an oval cross-sectional shape may be used for compression sleeves 1 with a hexagonal, octagonal or other angular cross-sectional shape.

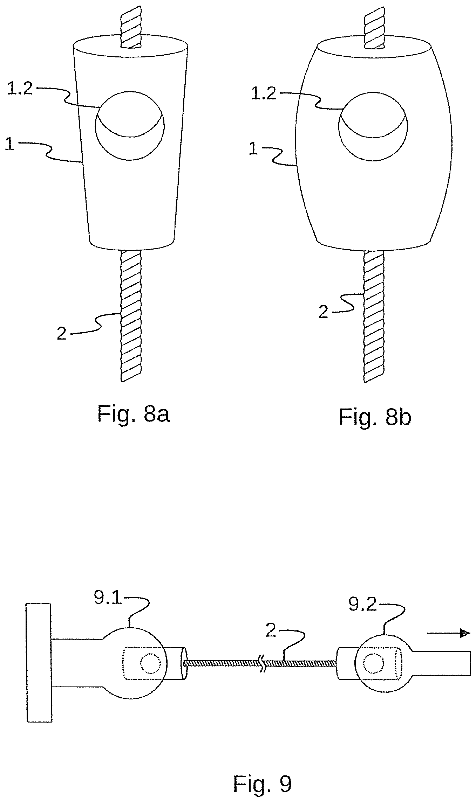

Fig. 8a depicts an embodiment of a swaging according to the present invention having a conical shape. Such a swaging can be manufactured by using a conical compression sleeve 1. A swaging with a conical shape as the one shown in Fig. 8a is useful for suspending the rope 2 by inserting the swaging in a correspondingly shaped recess with a conical inner wall of another component to effect an engagement of the swaging and the conical inner wall of another component.

Fig. 8b shows a further embodiment of a swaging according to the present invention with a convex shape. By such a shape, the swaging exhibits an enlarged layer of material surrounding hole 1.2. Thus, risk of sleeve break occurring at a site adjacent to hole 1.2 is reduced. By that geometry, stability of the swaging is further improved.

By the method for producing a swaging according to the present invention as described above, a swaging with increased breaking load is provided that enables improvement of the positioning accuracy of the swaging on the rope. It also allows detection of physical damage of the swaging after fitting it on a rope. The breaking load of the swagings produced according to the invention can be determined by a tensile test in a test station. A suitable setup is schematically depicted by Fig. 9. Rope 2 is terminated by swagings that are to be tested in terms of their breaking load at either terminus. The first swaging is mounted onto fixed bracket 9.1 that is fixedly positioned on a frame (not shown) of the test station. The other swaging on rope 2 is mounted in a moveable bracket 9.2 that is movably mounted to the frame of the test station in a direction parallel to the axial direction of rope 2. A tensile force is applied to the moveable bracket 9.2 by whatever suitable force generation means. The tensile force is adjusted to e.g. 90% of the minimum breaking load of the bare rope 2 without swagings and gradually increased until the swagings break. By precise calibration of the test station, such a procedure is suitable to perform a breaking load test in accordance with DIN EN 13411-8.

The swagings manufactured by the method according to the present invention were tested in the setup described above. Breaking loads of up to 93.7% of the minimum breaking load of rope 2 were thus obtained. This result demonstrates the capability of the swagings manufactured by the method according to the present invention to be used in fields of application that require rope connections that meet standardized durability requirements.
The description of the embodiments above only serves to illustrate the scope of the present invention as defined by the appended claims.

### Reference Sign List

- 1: compression sleeve
- 1.1: rope insertion hole
- 1.2: hole
- 1.3: indent
- 1.4: finished surface

- 2, 2.1: rope
- 2.2: second rope

- 3: force lines

- 9.1: mounting bracket
- 9.2: moveable bracket

- 10.1: compression section
- 10.2: bore
- 10.3: connecting section
- 10.4: end section
- 10.5: through hole

## Claims

1. Method for producing a swaging on a rope, particularly a wire rope, the method comprising the steps of:
• providing a compression sleeve (1) having at least one rope insertion hole (1.1) for individually inserting the at least one rope (2) individually in one or more insertion hole(s);
• inserting the at least one rope (2), particularly a wire rope, in the rope insertion hole (1.1);
• compressing the compression sleeve (1); and
• post-processing the compressed compression sleeve (1) to provide the swaging,
wherein the post-processing step comprises forming at least one hole (1.2) in the compressed compression sleeve (1) at a site where the rope (2) was previously disposed, **characterized in that** the diameter of the at least one hole (1.2) is equal to or larger than the diameter of the rope (2).

2. Method according to claim 1, wherein the rope (2) is completely cut off/ through at the at least one hole (1.2) during the post-processing step.

3. Method according to claim 1 or 2, wherein a compression sleeve (1) is provided that has a load-bearing capacity that is equal to or higher than a load-bearing capacity of the rope (2).

4. Method according to any of the preceding claims, wherein the compression step uses a pressing method.

5. Method according to any of the preceding claims, wherein the post-processing step is performed simultaneously with the compression of the sleeve (1) or afterwards, in particular using a combined punching and pressing method.

6. Method according to any of the preceding claims, wherein the at least one hole (1.2) is formed as a hole with a round cross section or as a hole with a non-round cross section.

7. Method according to any of the preceding claims, wherein the diameter of the rope insertion hole (1.1) essentially corresponds to the diameter of the rope (2).

8. Method according to any of the preceding claims, wherein the compression sleeve (1) has an essentially cylindrical shape, and the rope insertion hole (1.1) lies on the cylinder axis.

9. Method according to any of the preceding claims, wherein the rope insertion hole (1.1) is formed as a through-hole penetrating the compression sleeve (1), and wherein inserting the rope (2) in the rope insertion hole (1.1) is performed such that the rope (2) protrudes beyond both ends of the rope insertion hole (1.1).

10. Method according to any of the preceding claims, wherein the compression sleeve (1) comprises a plurality of rope insertion holes (1.1) and a plurality of ropes (2, 2.1) is individually inserted in respective rope insertion holes (1.1) before compressing the compression sleeve (1).

11. Method according to any of the preceding claims, wherein the at least one hole (1.2) is configured as a through hole.

12. Method according to claim 11, wherein the at least one hole (1.2) is formed essentially perpendicular to the direction of the rope (2) in the compression sleeve (1).

13. Method according to any of the preceding claims, wherein the at least one hole (1.2) is configured as a blind hole or as a cavity.

14. Method according to any of the preceding claims, wherein the post-processing step comprises a surface processing step on the compression sleeve (1), particularly modifying the shape of at least one surface of the compression sleeve (1).

15. Swaging, obtainable by a method according to any of claims 1 to 14, comprising:
- at least one rope (2), particularly a wire rope, and
- a compression sleeve (1) having at least one rope insertion hole (1.1) with the at least one rope (2) inserted in the one or more insertion hole(s), the compression sleeve (1) being compressed onto the at least one rope (2);
and
- at least one hole (1.2) formed in the compressed compression sleeve (1) and the rope (2), **characterized in that** the diameter of the at least one hole (1.2) is equal to or larger than the diameter of the rope (2).

16. Swaging according to claim 15, wherein the rope (2) is completely cut off/ through at the at least one hole (1.2).

17. Swaging according to any one of claims 15 or 16, wherein the compression sleeve (1) has a load-bearing capacity that is equal to or higher than a load-bearing capacity of the rope (2).

18. Method for connecting at least two intersecting ropes, the method comprising:
(a) producing at least one swaging on a rope (2) by a method of any of claims 1 to 9;
(b) individually inserting at least one second rope (2.2), particularly a wire rope, in the at least one hole (1.2) of the at least one swaging to form one or more connection(s) of rope (2) and the second rope(s) (2.2); and
(c) optionally repeating steps (a) and (b) for generating intersecting connections for one or more additional rope(s) (2).

19. Method for connecting at least two intersecting ropes according to claim 18, wherein the diameter of the hole (1.2) essentially corresponds to the diameter of the second rope (2.2).

20. Method for connecting at least two intersecting ropes according to claim 18 or 19, wherein the second rope (2.2) is movably arranged along its longitudinal axis in the at least one hole (1.2).

21. Method for connecting at least two intersecting ropes according to any one of claims 18 to 20, further comprising compressing the at least one swaging after the at least one second rope (2.2) has been individually inserted in the at least one hole (1.2) of the swaging.

22. Net-like rope assembly comprising at least two second ropes (2.2) and at least two ropes (2) comprising at least two swagings according to any one of claims 15 to 17.

23. Use of a swaging according to any of claims 15 to 17 for connecting at least two intersecting ropes according to the method of any of claims 18 to 21.

## Patentansprüche

1. Verfahren zum Herstellen einer Stauchung an einem Seil, insbesondere einem Drahtseil, wobei das Verfahren die folgenden Schritte umfasst:
• Bereitstellen einer Kompressionshülse (1) mit mindestens einer Seileinführungsöffnung (1.1) zum individuellen Einführen des mindestens einen Seils (2) einzeln in eine oder mehrere Einführungsöffnung(en);
• Einführen des mindestens einen Seils (2), insbesondere eines Drahtseils, in die Seileinführungsöffnung (1.1);
• Komprimieren der Kompressionshülse (1); und
• Nachbearbeiten der komprimierten Kompressionshülse (1) zum Bereitstellen der Stauchung,
wobei der Nachbearbeitungsschritt das Ausbilden mindestens eines Lochs (1.2) in der komprimierten Kompressionshülse (1) an einer Stelle, an der das Seil (2) zuvor angeordnet war, umfasst,
**dadurch gekennzeichnet, dass** der Durchmesser des mindestens einen Lochs (1.2) gleich oder größer als der Durchmesser des Seils (2) ist.

2. Verfahren nach Anspruch 1, wobei das Seil (2) während des Nachbearbeitungsschrittes an dem mindestens einen Loch (1.2) vollständig abgeschnitten/durchtrennt wird.

3. Verfahren nach Anspruch 1 oder 2, wobei eine Kompressionshülse (1) vorgesehen ist, die eine Traglastfähigkeit aufweist, die gleich oder höher ist als die Traglastfähigkeit des Seils (2).

4. Verfahren nach einem der vorhergehenden Ansprüche, wobei der Kompressionsschritt ein Pressverfahren verwendet.

5. Verfahren nach einem der vorhergehenden Ansprüche, wobei der Nachbearbeitungsschritt gleichzeitig mit der Kompression der Hülse (1) oder danach durchgeführt wird, insbesondere unter Verwendung eines kombinierten Stanz- und Pressverfahrens.

6. Verfahren nach einem der vorstehenden Ansprüche, wobei das mindestens eine Loch (1.2) als Loch mit einem runden Querschnitt oder als Loch mit einem nichtrunden Querschnitt ausgebildet ist.

7. Verfahren nach einem der vorstehenden Ansprüche, wobei der Durchmesser der Seileinführungsöffnung (1.1) im Wesentlichen dem Durchmesser des Seils (2) entspricht.

8. Verfahren nach einem der vorhergehenden Ansprüche, wobei die Kompressionshülse (1) eine im Wesentlichen zylindrische Form aufweist und die Seileinführungsöffnung (1.1) auf der Zylinderachse liegt.

9. Verfahren nach einem der vorhergehenden Ansprüche, wobei die Seileinführungsöffnung (1.1) als Durchgangsloch ausgebildet ist, das in die Kompressionshülse (1) eindringt, und wobei das Einführen des Seils (2) in die Seileinführungsöffnung (1.1) so durchgeführt wird, dass das Seil (2) über beide Enden der Seileinführungsöffnung (1.1) hinausragt.

10. Verfahren nach einem der vorhergehenden Ansprüche, wobei die Kompressionshülse (1) eine Vielzahl von Seileinführungsöffnungen (1.1) umfasst und eine Vielzahl von Seilen (2, 2.1) einzeln in die jeweiligen Seileinführungsöffnungen (1.1) eingeführt werden, bevor die Kompressionshülse (1) komprimiert wird.

11. Verfahren nach einem der vorhergehenden Ansprüche, wobei das mindestens eine Loch (1.2) als Durchgangsloch ausgebildet ist.

12. Verfahren nach Anspruch 11, wobei das mindestens eine Loch (1.2) im Wesentlichen senkrecht zur Richtung des Seils (2) in der Kompressionshülse (1) ausgebildet wird.

13. Verfahren nach einem der vorstehenden Ansprüche, wobei das mindestens eine Loch (1.2) als Sackloch oder als Hohlraum ausgebildet ist.

14. Verfahren nach einem der vorhergehenden Ansprüche, wobei der Nachbearbeitungsschritt einen Oberflächenbearbeitungsschritt an der Kompressionshülse (1) umfasst, insbesondere das Modifizieren der Form mindestens einer Oberfläche der Kompressionshülse (1).

15. Stauchung, erhältlich durch ein Verfahren nach einem der Ansprüche 1 bis 14, umfassend:
- mindestens ein Seil (2), insbesondere ein Drahtseil, und
- eine Kompressionshülse (1) mit mindestens einer Seileinführungsöffnung (1.1), wobei das mindestens eine Seil (2) in die eine oder mehrere Einführungsöffnung(en) eingeführt ist, wobei die Kompressionshülse (1) auf das mindestens eine Seil (2) gedrückt wird;
und
- mindestens ein Loch (1.2), das in der komprimierten Kompressionshülse (1) und dem Seil (2) ausgebildet ist,
**dadurch gekennzeichnet, dass** der Durchmesser des mindestens einen Lochs (1.2) gleich oder größer als der Durchmesser des Seils (2) ist.

16. Stauchung nach Anspruch 15, wobei das Seil (2) an dem mindestens einen Loch (1.2) vollständig abgeschnitten/durchtrennt ist.

17. Stauchung nach einem der Ansprüche 15 oder 16, wobei die Kompressionshülse (1) eine Traglastfähigkeit aufweist, die gleich oder höher ist als die Traglastfähigkeit des Seils (2).

18. Verfahren zum Verbinden von mindestens zwei sich kreuzenden Seilen, wobei das Verfahren umfasst:
(a) Herstellen von mindestens einer Stauchung an einem Seil (2) nach einem Verfahren nach einem der Ansprüche 1 bis 9;
(b) individuelles Einführen mindestens eines zweiten Seils (2.2), insbesondere eines Drahtseils, in das mindestens eine Loch (1.2) der mindestens einen Stauchung, um eine oder mehrere Verbindung(en) zwischen Seil (2) und dem (den) zweiten Seil(en) (2.2) herzustellen; und
(c) gegebenenfalls Wiederholen der Schritte (a) und (b) zum Erzeugen von Kreuzungsverbindungen für ein oder mehrere zusätzliche Seil(e) (2).

19. Verfahren zum Verbinden von mindestens zwei sich kreuzenden Seilen nach Anspruch 18, wobei der Durchmesser des Lochs (1.2) im Wesentlichen dem Durchmesser des zweiten Seils (2.2) entspricht.

20. Verfahren zum Verbinden von mindestens zwei sich kreuzenden Seilen nach Anspruch 18 oder 19, wobei das zweite Seil (2.2) in dem mindestens einen Loch (1.2) entlang seiner Längsachse beweglich angeordnet ist.

21. Verfahren zum Verbinden von mindestens zwei sich kreuzenden Seilen nach einem der Ansprüche 18 bis 20, ferner umfassend das Komprimieren der mindestens einen Stauchung, nachdem das mindestens eine zweite Seil (2.2) einzeln in das mindestens eine Loch (1.2) der Stauchung eingeführt wurde.

22. Netzartige Seilanordnung, umfassend mindestens zwei zweite Seile (2.2) und mindestens zwei Seile (2) mit mindestens zwei Stauchungen nach einem der Ansprüche 15 bis 17.

23. Verwendung einer Stauchung nach einem der Ansprüche 15 bis 17 zum Verbinden von mindestens zwei sich kreuzenden Seilen nach dem Verfahren eines der Ansprüche 18 bis 21.

## Revendications

1. Procédé pour former un sertissage sur un câble, en particulier un câble métallique, le procédé comprenant les étapes dans lesquelles :
• on procure un manchon de compression (1) possédant au moins un trou d'insertion de câble (1.1) pour l'insertion individuelle dudit au moins un câble (2) de manière individuelle dans un ou plusieurs trous d'insertion ;
• on insère ledit au moins un câble (2), en particulier un câble métallique, dans le trou d'insertion de câble (1.1) ;
• on comprime le manchon de compression (1) ; et
• on soumet le manchon de compression comprimé (1) à un traitement ultérieur afin d'obtenir le sertissage,
dans lequel l'étape de traitement ultérieur comprend la formation d'au moins un trou (1.2) dans le manchon de compression comprimé (1) à un endroit dans lequel le câble (2) a été disposé précédemment ;
**caractérisé en ce que** le diamètre dudit au moins un trou (1.2) est égal ou supérieur au diamètre de câble (2).

2. Procédé selon la revendication 1, dans lequel le câble (2) est complètement coupé/tranché audit au moins un trou (1.2) au cours de l'étape de traitement ultérieur.

3. Procédé selon la revendication 1 ou 2, dans lequel on prévoit un manchon de compression (1) qui possède une capacité de support de charge qui est égale ou supérieure à une capacité de support de charge du câble (2).

4. Procédé selon l'une quelconque des revendications précédentes, dans lequel l'étape de compression utilise un procédé de pression.

5. Procédé selon l'une quelconque des revendications précédentes, dans lequel l'étape de traitement ultérieur est mise en œuvre de manière simultanée avec la compression du manchon (1) ou à un moment ultérieur, en particulier en utilisant un procédé combiné de perforation et de pression.

6. Procédé selon l'une quelconque des revendications précédentes, dans lequel ledit au moins un trou (1.2) est réalisé sous la forme d'un trou possédant une section transversale de forme arrondie ou sous la forme d'un trou possédant une section transversale de forme non arrondie.

7. Procédé selon l'une quelconque des revendications précédentes, dans lequel le diamètre du trou d'insertion de câble (1.1) correspond essentiellement au diamètre du câble (2).

8. Procédé selon l'une quelconque des revendications précédentes, dans lequel le manchon de compression (1) possède une configuration essentiellement de forme cylindrique, et le trou d'insertion de câble (1.1) est situé sur l'axe du cylindre.

9. Procédé selon l'une quelconque des revendications précédentes, dans lequel le trou d'insertion de câble (1.1) est réalisé sous la forme d'un trou de passage qui pénètre à travers le manchon de compression (1), et dans lequel l'insertion du câble (2) dans le trou d'insertion de câble (1.1) est mise en œuvre d'une manière telle que le câble (2) fait saillie au-delà des deux extrémités du trou d'insertion de câble (1.1).

10. Procédé selon l'une quelconque des revendications précédentes, dans lequel le manchon de compression (1) comprend plusieurs trous d'insertion de câbles (1.1) et plusieurs câbles (2, 2.1) sont insérés de manière individuelle dans des trous d'insertion de câbles respectifs (1.1) avant la compression du manchon de compression (1).

11. Procédé selon l'une quelconque des revendications précédentes, dans lequel ledit au moins un trou (1.2) est configuré sous la forme d'un trou de passage.

12. Procédé selon la revendication 11, dans lequel ledit au moins un trou (1.2) est réalisé essentiellement à la perpendiculaire de la direction du câble (2) dans le manchon de compression (1).

13. Procédé selon l'une quelconque des revendications précédentes, dans lequel ledit au moins un trou (1.2) est configuré sous la forme d'un trou borgne ou sous la forme d'une cavité.

14. Procédé selon l'une quelconque des revendications précédentes, dans lequel l'étape de traitement ultérieur comprend une étape de traitement de surface sur le manchon de compression (1), en particulier une modification de la configuration d'au moins une surface du manchon de compression (1).

15. Sertissage, que l'on peut obtenir via un procédé selon l'une quelconque des revendications 1 à 14, comprenant :
- au moins un câble (2), en particulier un câble métallique ; et
- un manchon de compression (1) possédant au moins un trou d'insertion de câble (1.1), ledit au moins un câble (2) étant inséré dans lesdits un ou plusieurs trous d'insertion, le manchon de compression (1) étant comprimé sur ledit au moins un câble (2) ; et
- au moins un trou (1.2) formé dans le manchon de compression comprimé (1) et le câble (2) ;
**caractérisé en ce que** le diamètre dudit au moins un trou (1.2) est égal ou supérieur au diamètre de câble (2).

16. Sertissage selon la revendication 15, dans lequel le câble est complètement coupé/tranché audit au moins un trou (1.2).

17. Sertissage selon la revendication 15 ou 16, dans lequel le manchon de compression (1) possède une capacité de support de charge qui est égale ou supérieure à une capacité de support de charge du câble (2).

18. Procédé pour relier au moins deux câbles qui se croisent, le procédé comprenant le fait de :
(a) former au moins sertissage sur un câble (2) via un procédé selon l'une quelconque des revendications 1 à 9 ;
(b) insérer de manière individuelle au moins un deuxième câble (2.2), en particulier un câble métallique, dans ledit au moins un trou (1.2) dudit au moins sertissage afin d'obtenir une ou plusieurs liaisons du câble (2) et du ou des deuxièmes câbles (2.2) ; et
(c) le cas échéant, répéter les étapes (a) et (b) pour obtenir des liaisons de croisement pour un ou plusieurs câbles supplémentaires (2).

19. Procédé destiné à la liaison d'au moins deux câbles qui se croisent selon la revendication 18, dans lequel le diamètre dudit au moins un trou (1.2) correspond de manière essentielle au diamètre du deuxième câble (2.2).

20. Procédé destiné à la liaison d'au moins deux câbles qui se croisent selon la revendication 18 ou 19, dans lequel le deuxième câble (2.2) est disposé en mobilité le long de son axe longitudinal dans ledit au moins un trou (1.2).

21. Procédé destiné à la liaison d'au moins deux câbles qui se croisent selon l'une quelconque des revendications 18 à 20, comprenant en outre la compression dudit au moins un sertissage après l'insertion individuelle dudit au moins un deuxième câble (2.2) dans ledit au moins un trou (1.2) du sertissage.

22. Assemblage de câbles en forme de filet comprenant au moins deux deuxièmes câbles (2.2) et au moins deux câbles (2) comprenant au moins deux sertissages selon l'une quelconque des revendications 15 à 17.

23. Utilisation d'un sertissage selon l'une quelconque des revendications 15 à 17 pour la liaison d'au moins deux câbles qui se croisent conformément au procédé selon l'une quelconque des revendications 18 à 21.
